# EUROPÄISCHE PATENTSCHRIFT

(11) **EP 0 374 639 B1**
(45) Veröffentlichungstag und Bekanntmachung des Hinweises auf die Patenterteilung: **23.03.1994**
(21) Anmeldenummer: 89122691.2
(22) Anmeldetag: 08.12.1989
(51) Int. Cl.: H02G 3/04

(54) **Rohraggregat für die Aufname von Kabeln**
Pipe assembly for carrying cables
Ensemble de tuyaux pour la réception de câbles

(30) Priorität: 22.12.1988 DE 3843118; 13.02.1989 DE 3904199
(43) Veröffentlichungstag der Anmeldung: 27.06.1990
(73) Patentinhaber: Dipl.-Ing. Dr. Ernst Vogelsang GmbH & Co. KG, D-45699 Herten (DE)
(72) Erfinder: Vogelsang, Horst, D-4352 Herten (DE)
(74) Vertreter: Andrejewski, Walter

(56) Entgegenhaltungen:
- EP-A- 0 231 504
- AT-B- 373 737
- DE-B- 1 082 953

## Beschreibung

Die Erfindung betrifft ein Rohraggregat für die Aufnahme von Kabeln aus vier stranggepreßten Kunststoffrohren, die einen mehreckigen Querschnitt aufweisen sowie durch angeformte flexible Abstandsstege vereinigt und zu einem in bezug auf zwei Achsen symmetrischen Rohrbündel zusammenlegbar sind, wobei im Rohrbündel jeweils zwei gegenüberliegende Flächen des Querschnitts der einzelnen Kunststoffrohre als Kontaktflächen aneinanderliegen und ein Kernhohlraum freibleibt, und wobei die außenliegenden Rohre des Rohraggregates mit Verschlußelementen zur Fixierung des Rohrbündels im zusammengelegten Zustand ausgerüstet sind.

Bei dem bekannten Rohraggregat, von dem die Erfindung ausgeht, (EP-A-0 231 504), besitzen die Kunststoffrohre einen runden Innen- und Außenquerschnitt, jedoch, gleichsam umhüllend, kontaktflächenbildende Bauteile, die einen dreieckigen Außenquerschnitt definieren. Die Außenflächen dieser umhüllenden Bauteile bilden die Kontaktflächen. Das ist in fertigungstechnischer Hinsicht aufwendig und verlangt einen verhältnismäßig großen Materialaufwand. Würde man die Kunststoffrohre querschnittsmäßig so gestalten, wie es durch die kontaktflächenbildenden Bauteile vorgegeben ist, so genügen die Kunststoffrohre bei üblichen Wanddicken in stabilitätsmäßiger Hinsicht nicht allen Anforderungen.

Bei einen anderen bekannten Rohraggregat (AT-B-373737), bei dem die einzelnen Rohre einen quadratischen, dreieckigen oder sechseckigen Querschnitt aufweisen, sind die einzelnen Rohre an den Querschnittsecken mit Stegen geringer Breite versehen, die wie Filmscharniere wirken und ein Zusammenlegen des Rohraggregats zu einem Rohrbündel, auch mit Kernhohlraum, erlauben. Bewegungsfreiheitsgrade bei bogenförmiger Führung sind nicht erkennbar.

Im übrigen kennt man Rohraggregate der beschriebenen Zweckbestimmung, bei denen die Kunststoffrohre einen runden Außen- und Innenquerschnitt aufweisen. Hier berühren sich die runden Kunststoffrohre im Rohrbündel theoretisch nur linienförmig, nicht aber flächig. Außerdem sind zusätzliche Bauteile als Kernelemente angeordnet, damit das Rohraggregat, zum Bündel zusammengelegt, hinreichend stabil ist. In allen Fällen kennt man äußere Verschlußelemente, die das zum Rohrbündel zusammengelegte Rohraggregat fixieren. Ferner ist ein Mehrfach-Elektroinstallationsrohr bekannt, welches in flachgelegtem Zustand verlegt wird und dessen Kunststoffrohre einen achteckigen Querschnitt aufweisen (DE-B-1 082 953).

Der Erfindung liegt die Aufgabe zugrunde, ein Rohraggregat des eingangs beschriebenen Aufbaus so weiter auszubilden, daß die Kontaktflächen den Rohrwänden der Kunststoffrohre angehören und besondere, kontaktflächenbildende Bauteile nicht erforderlich sind.

Diese Aufgabe wird dadurch gelöst, daß die Kunststoffrohre einen achteckigen Außenquerschnitt aufweisen, daß die Abstandsstege an die zugeordneten Flächen des achteckigen Außenquerschnitts mittig angeschlossen sind, und daß die Verschlußelemente und die Abstandsstege ein Spiel zwischen den Kontaktflächen definieren und das Rohrbündel dadurch bogenförmig verlegbar ist.

Im einzelnen bestehen im Rahmen der Erfindung mehrere Möglichkeiten der weiteren Ausbildung und Gestaltung. Eine bevorzugte Ausführungsform der Erfindung, die sich durch verhältnismäßig geringen Materialaufwand auszeichnet, ist dadurch gekennzeichnet, daß die Kunststoffrohre einen dem achteckigen Außenquerschnitt entsprechenden achteckigen Innenquerschnitt aufweisen.

Dabei können die Ecken des Innenquerschnitts verrundet sein. Wo es auf einen möglichst geringen Materialaufwand weniger ankommt und hohe Stabilität verlangt wird, kann die Anordnung so getroffen werden, daß die Kunststoffrohre einen runden Innenquerschnitt aufweisen, während der Außenquerschnitt in der beschriebenen Weise regelmäßig achteckig ist.

Wesentlich für die Stabilität des Rohraggregates im zum Rohrbündel zusammengelegten Zustand der Kunststoffrohre ist, daß die Breite der Abstandsstege, d.h. der Abstand von Kunststoffrohr zu Kunststoffrohr in dem ebenen, noch nicht gebündelten Rohraggregat, so eingerichtet ist, daß die beschriebene flächige Auflage der einander zugeordneten, gleichsam komplementären Flächen des achteckigen Außenquerschnitts der Kunststoffrohre mit flächigem Kontakt sicher erfolgt. Man erreicht so trotz des flächigen Kontaktes der äußeren Querschnittsflächen ausreichende Bewegungsfreiheitsgrade bei der bogenförmigen Führung und ausreichende Flexibilität.

Im Rahmen der Erfindung können die Außenquerschnitte und die Innenquerschnitte der Kunststoffrohre im übrigen weitgehend beliebig eingerichtet sein. Nach bevorzugter Ausführungsform der Erfindung besitzen die Kunststoffrohre einen regelmäßig achteckigen Außenquerschnitt und sind die Seitenflächen aller Kunststoffrohre gleich groß und im Außenquerschnitt gleich groß. Der Außenquerschnitt kann aber auch unregelmäßig achteckig sein. Das gilt auch für den Innenquerschnitt. In diesem Zusammenhang ist eine bevorzugte Ausführungsform der Erfindung dadurch gekennzeichnet, daß die Kunststoffrohre einen achteckigen Außenquerschnitt aufweisen, bei dem zwei gegenüberliegende Seiten eine größere Seitenlänge besitzen als die übrigen gleichlangen Seiten. Im allgemeinen sind in einem erfindungsgemäßen Rohraggregat die Querschnitte aller Kunststoffrohre gleich groß. Soweit darunter die Bündelung nicht leidet, können sie auch unterschiedlich groß sein.

Die erreichten Vorteile sind darin zu sehen, daß bei einem erfindungsgemäßen Rohraggregat besondere, kontaktflächenbildende Bauteile nicht mehr erforderlich sind. Das reduziert den fertigungstechnischen Aufwand und den Materialaufwand. Darüber hinaus zeichnen sich bei dem erfindungsgemäßen Rohraggregat die einzelnen Kunststoffrohre, aber auch das Rohrbündel insgesamt, durch große Stabilität aus. Folglich kann den Anforderungen, die die Praxis insbesondere bei erdverlegten Kabeln stellt, mit verhältnismäßig dünnen Wanddicken der Kunststoffrohre entsprochen werden. Die Wanddicke der Abstandsstege ist so gewählt, daß die erforderliche Verformung beim Zusammenlegen der Kunststoffrohre zum Rohrbündel, gewährleistet ist.

Im folgenden wird die Erfindung anhand einer lediglich ein Ausführungsbeispiel darstellenden Zeichnung ausführlicher erläutert. Es zeigen in schematischer Darstellung
- Fig. 1: einen Querschnitt durch ein erfindungsgemäßes Rohraggregat im gleichsam ebenen, nicht zusammengelegten Zustand,
- Fig. 2: den Gegenstand nach Fig. 1, zusammengelegt zum Rohrbündel, und
- Fig. 3: entsprechend der Fig. 2 eine andere Ausführungsform eines erfindungsgemäßen Rohraggregates.

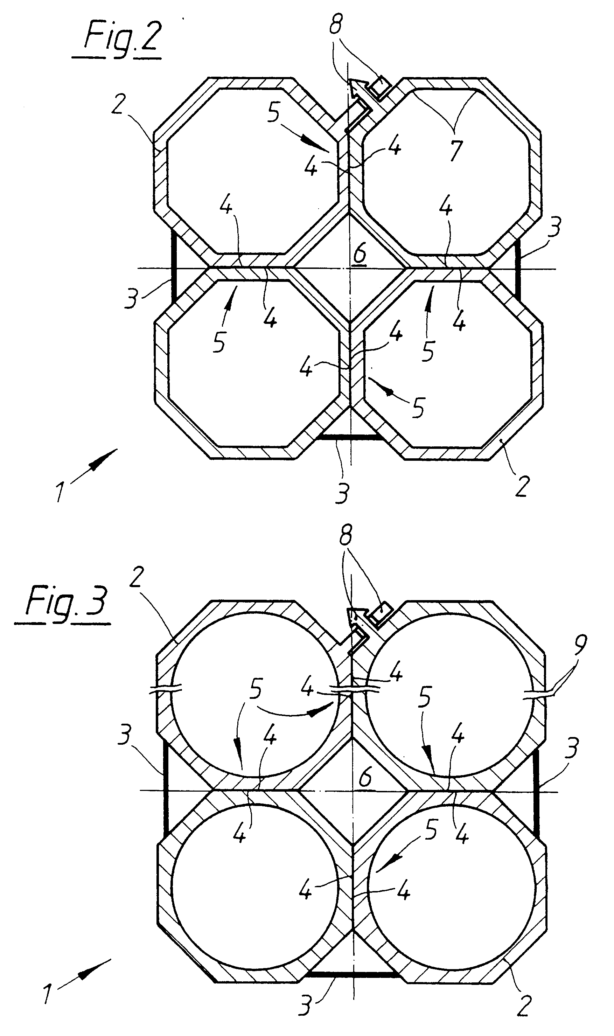

Das in den Figuren dargestellte Rohraggregat 1 ist für die Aufnahme von Kabeln bestimmt. Es besteht aus vier stranggepreßten Kunststoffrohren 2, die durch angeformte flexible Abstandsstege 3 vereinigt und zu einem Rohrbündel (vgl. Fig. 2, 3) zusammenlegbar sind. Das Rohrbündel ist in bezug auf zwei orthogonale Achsen, die in Fig. 2 eingetragen worden sind, symmetrisch.

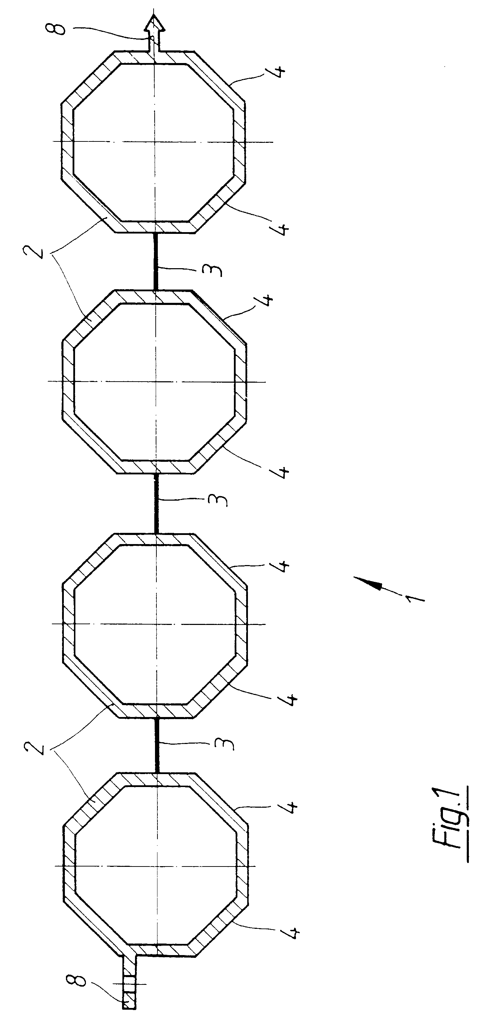

Man entnimmt aus den Fig. 1 und 2, daß die Kunststoffrohre 2 einen regelmäßig achteckigen Außenquerschnitt aufweisen. Die Abstandsstege 3 sind so eingerichtet, daß im Rohrbündel jeweils zwei gegenüberliegende Flächen 4 des achteckigen Querschnitts als Kontaktflächen bei 5 satt aufeinanderliegen, wobei ein quadratischer Kernhohlraum 6 freibleibt, der ebenfalls als Kabelkanal eingesetzt werden kann. Im Ausführungsbeispiel nach den Fig. 1 und 2 besitzen die Kunststoffrohre 2 einen dem achteckigen Außenquerschnitt entsprechenden achteckigen Innenquerschnitt. Bei der Ausführungsform nach Fig. 2 erkennt man in dem Kunststoffrohr 2 rechts oben andeutungsweise verrundete Ecken 7 des Innenquerschnitts. Bei der Ausführungsform nach Fig. 3 besitzen die Kunststoffrohre 2 demgegenüber einen runden Innenquerschnitt.

Im Ausführungsbeispiel nach den Fig. 1 und 2 sind die Abstandsstege 3 an die zugeordnete Fläche des achteckigen Außenquerschnitts mittig angeschlossen. Im Ausführungsbeispiel nach Fig. 3 sind die Abstandsstege 3 an die zugeordnete Fläche des achteckigen Außenquerschnitts außerhalb der Mitte, nach außen versetzt, angeordnet. Man erkennt in der Fig. 2 Verschlußelemente 8 zur Fixierung des Rohrbündels, die an die außenliegenden Kunststoffrohre 2 angeschlossen sind. Die dargestellte Form der Verschlußelemente 8 bewirkt, daß die Bündelung wie, gezeichnet erfolgen muß, wenn anders der Verschluß nicht schließbar ist. Die Kunststoffrohre 2, die Abstandsstege 3 und die Verschlußelemente 8 sind einstückig aus Polyethylen geformt, und zwar im Wege des Strangpressens.

In den Fig. 1 und 2 sind die Querschnitte aller Kunststoffrohre 2 gleich groß. In Fig. 3 ist im oberen Teil durch Unterbrechungslinien 9 angedeutet, daß die Kunststoffrohre 2 einen achteckigen Außenquerschnitt aufweisen können, bei dem zwei gegenüberliegende Seiten eine größere Seitenlänge besitzen können als die übrigen gleichlangen Seiten. Das kann bei zwei oder allen Kunststoffrohren 2 verwirklicht sein.

## Patentansprüche

1. Rohraggregat für die Aufnahme von Kabeln aus vier stranggepreßten Kunststoffrohren (2), die einen mehreckigen Querschnitt aufweisen sowie durch angeformte flexible Abstandsstege (3) vereinigt und zu einem in bezug auf zwei Achsen symmetrischen Rohrbündel zusammenlegbar sind, wobei im Rohrbündel jeweils zwei gegenüberliegende Flächen (4) des Querschnitts der einzelnen Kunststoffrohre (2) als Kontaktflächen aneinanderliegen und ein Kernhohlraum (6) freibleibt und wobei die außenliegenden Rohre des Rohraggregates mit Verschlußelementen zur Fixierung des Rohrbündels im zusammengelegten Zustand ausgerüstet ist, **dadurch gekennzeichnet**, daß die Kunststoffrohre (2) einen achteckigen Außenquerschnitt aufweisen, daß die Abstandsstege (3) an die zugeordneten Flächen (4) des achteckigen Außenquerschnitts mittig angeschlossen sind und daß die Verschlußelemente (8) und die Abstandsstege (3) ein Spiel zwischen den Kontaktflächen definieren und das Rohrbündel dadurch bogenförmig verlegbar ist.

2. Rohraggregat nach Anspruch 1, dadurch gekennzeichnet, daß die Kunststoffrohre (2) einen dem achteckigen Außenquerschnitt entsprechenden achteckigen Innenquerschnitt aufweisen.

3. Rohraggregat nach Anspruch 2, dadurch gekennzeichnet, daß die Ecken (7) des Innenquerschnitts verrundet sind.

4. Rohraggregat nach Anspruch 1, dadurch gekennzeichnet, daß die Kunststoffrohre (2) einen runden Innenquerschnitt aufweisen.

5. Rohraggregat nach einem der Ansprüche 1 bis 4, dadurch gekennzeichnet, daß die Kunststoffrohre (2) einen regelmäßig achteckigen Außenquerschnitt aufweisen.

6. Rohraggregat nach einem der Ansprüche 1 bis 5, dadurch gekennzeichnet, daß die Kunststoffrohre (2) einen achteckigen Außenquerschnitt aufweisen, bei dem zwei gegenüberliegende Seiten eine größere Seitenlänge aufweisen als die übrigen gleichlangen Seiten.

## Claims

1. A pipe aggregate for cable enclosing, consisting of four extruded plastic pipes (2) having a polygonal cross section which are joined by flexibly formed distance webs (3) and collapsible into a pipe bundle symmetrical with reference to two axes, whereby in the pipe bundle any two opposite faces (4) of the individual plastic pipes' (2) cross section adjoin each other as contact faces, and a core cavity (6) remains free, and whereby the externally located pipes of the pipe aggregate are equipped with sealing elements to fix the pipe bundle in folded condition, **characterized** in that the plastic pipes (2) comprise an octagonal outside cross section, in that the distance webs (3) are centrally connected to the associated faces (4) of the octagonal outside cross section, and in that the sealing elements (8) and the distance webs (3) define a clearance between the contact faces, thus enabling to install the pipe bundle in arc shape.

2. A pipe aggregate according to claim 1, **characterized** in that the plastic pipes (2) comprise an octagonal inside cross section corresponding with the octagonal outside cross section.

3. A pipe aggregate according to claim 2, **characterized** in that the corners (7) of the inside cross section are rounded.

4. A pipe aggregate according to claim 1, **characterized** in that the plastic pipes (2) comprise a round inside cross section.

5. A pipe aggregate according to any of claims 1 to 4, **characterized** in that the plastic pipes (2) regularly comprise an octagonal outside cross section.

6. A pipe aggregate according to any of claims 1 to 5, **characterized** in that the plastic pipes (2) comprise an octagonal outside cross section, two opposite sides of which have a greater length than the remaining sides of equal length.

## Revendications

1. Groupe de tubes destiné au logement de câbles composé de quatre tubes en plastique (2) extrudés présentant une section polygonale, reliés par des entretoises d'écartement (3) flexibles surmoulées et pouvant être assemblés en faisceau de tubes symétrique par rapport à deux axes, deux surfaces opposées (4) de la section des différents tubes en plastique (2) étant respectivement posées l'une contre l'autre pour former des surfaces de contact dans le faisceau de tubes, une cavité centrale (6) restant libre, et les tubes du groupe de tubes situés à l'extérieur étant équipés d'éléments de fermeture servant à fixer le faisceau de tubes à l'état assemblé, **caractérisé par le fait** que les tubes en plastique (2) présentent une section extérieure octogonale, que les entretoises d'écartement (3) sont raccordées aux surfaces correspondantes (4) de la section extérieure octogonale en leur milieu, que les éléments de fermeture (8) et les entretoises d'écartement (3) définissent un jeu entre les surfaces de contact et que le faisceau de tubes peut ainsi être posé en forme d'arc.

2. Groupe de tubes selon la revendication 1, **caractérisé par le fait** que les tubes en plastique (2) présentent une section intérieure octogonale correspondant à la section extérieure octogonale.

3. Groupe de tubes selon la revendication 2, **caractérisé par le fait** que les angles (7) de la section intérieure sont arrondis.

4. Groupe de tubes selon la revendication 1, **caractérisé par le fait** que les tubes en plastique (2) présentent une section intérieure ronde.

5. Groupe de tubes selon l'une des revendications 1 à 4, **caractérisé par le fait** que les tubes en plastique (2) présentent une section extérieure octogonale régulière.

6. Groupe de tubes selon l'une des revendications 1 à 5, **caractérisé par le fait** que les tubes en plastique (2) présentent une section extérieure octogonale sur laquelle deux côtés opposés présentent une longueur latérale plus importante que les autres côtés de même longueur.
